# EUROPEAN PATENT SPECIFICATION

(11) **EP 3 538 461 B1**
(45) Date of publication and mention of the grant of the patent: **27.08.2025**
(21) Application number: 17817238.3
(22) Date of filing: 14.11.2017
(51) Int. Cl.: B65G 57/14

(54) **DEVICE AND METHOD FOR STACKING RECTANGULAR PACKAGING UNITS**
VORRICHTUNG UND VERFAHREN ZUM STAPELN VON RECHTECKIGEN VERPACKUNGSEINHEITEN
DISPOSITIF ET PROCÉDÉ D'EMPILEMENT D'UNITÉS D'EMBALLAGE RECTANGULAIRES

(30) Priority: 14.11.2016 NL 2017778
(43) Date of publication of application: 18.09.2019
(73) Proprietor: Hedipack Technology Beheer B.V., 6971 LG Brummen (NL)
(72) Inventor: GROOTHERDER, Berend Derk, 6971 LG Brumen (NL)
(74) Representative: Algemeen Octrooi- en Merkenbureau B.V.
(86) International application number: PCT/NL2017/050737
(87) International publication number: WO 2018/088908

(56) References cited:
- EP-A1- 0 937 668
- JP-A- 2002 284 349
- US-A- 3 589 497
- US-A- 4 646 908

## Description

The invention relates to a device for stacking rectangular packaging units, for example trays, in order to form a stack of packaging units, wherein the device is provided with at least one feed belt for supplying packaging units in a first feed direction, with a support as stacking location, and with a stacking unit comprising at least one carrier member for picking up at least one packaging unit from a pick-up location on the feed belt in order to move the packaging unit from the feed belt to the support by means of the carrier member.

The invention furthermore relates to a method for stacking rectangular packaging units, for example trays, in order to form a stack of packaging units, wherein the rectangular packaging units are supplied in a feed direction by means of at least one feed belt, wherein a packaging unit of the packaging units is picked up at a pick-up location on the feed belt by means of a carrier member and moved to a stacking location.

With a traditional device for stacking packaging units, rectangular packaging units, such as egg trays, are supplied on a horizontal conveyor. The trays come to a standstill against a stop. Subsequently, each tray is carried along in a vertical direction by a carrier member which forms part of a stacking unit. The carrier member lifts the tray from the horizontal conveyor and takes the tray to a stacking location via a track in the shape of an upturned U. When the tray touches the bottom thereof or a tray which is already present, the tray remains behind at that location and the carrier member continues.

A drawback of the known device is the fact that transportation takes place in a jolty manner, which is caused by the packaging units coming to a standstill against the stop and the packaging units then being picked up again from standstill by the carrier members. This increases the risk of damage of the packaging units or the product packaged therein, which may be particularly disadvantageous if the product in the packaging unit is a fragile product, such as for example an egg.

US 4.646.908 discloses a device and a method according to the preamble of the independent claims. The device for the formation of stacks of packages formed by two single packages comprises a flat conveyor formed by two closed circuit longitudinal parallel conveyors and by two sliding support wheel guides disposed parallel and externally adjacent to the conveyors. In use, the packages are taken up by the conveyors and by lifting devices, wherein the package taken up by the lifting devices is lifted and then deposited on the previous package which has meanwhile moved downstream and below the latter on the conveyor.

It is therefore an object of the present invention to provide a device for stacking rectangular packaging units in which the risk of damage of the packaging unit or the product is limited.

This object is achieved by the device for stacking rectangular packaging units according to Claim 1.

An advantage of the device is the fact that a first moving direction of the carrier member for a packaging unit to be stacked encloses at the pick-up location an acute angle with the feed direction in which the packaging unit is supplied. As a result thereof, it is possible to remove a packaging unit from a conveyor without interruption in the feed direction of the feed belt. As no stops are performed, there no longer has to be any space left between packaging units supplied via a conveyor, as a result of which the capacity of the device can be increased. The acute angle at the pick-up location is less than 60 degrees, preferably less than 40 degrees and/or more than 10 degrees, preferably more than 20 degrees.

The packaging units may be transferred to the stacking location by means of the carrier member by a continuous displacement at a more or less constant speed of the feed belt. As no stops are performed in the feed direction of the packaging unit, jolty transportation and its associated risk of damage of the packaging unit or breakage of the packaged product are reduced and/or even prevented in the device. As a result thereof, it is possible to move a packaging unit in the device from the feed belt to the stacking location in an advantageous and continuous manner, which may also increase the capacity of the device.

By suitably selecting the acute angle of the moving direction with respect to the feed direction with regard to a desired supply velocity of the feed belt in the feed direction, it is possible, in the device, for the velocity component of carrier member extending in the feed direction to be equal to a supply velocity of the feed belt in the feed direction at the pick-up location. In the first moving direction, the carrier member has both a horizontal velocity component and a vertical velocity component for picking up a packaging unit.

The device is furthermore provided with a discharge system, wherein the first discharge direction of the stack of packaging units of the discharge system from the stacking location is identical to the feed direction of the feed belt at the pick-up location.

As the conveyor (the feed belt and at least one discharge belt of the discharge system) continues, it is also possible to temporarily move other packs than those that are to be stacked on the conveyor. For this temporary option, the carrier members may be deactivated or at least not engage with any passing packs. In this way, the device can be used in different ways.

The device is particularly suitable for stacking egg trays. Such egg trays usually contain 30 eggs. However, due to the configuration of the conveyor, the device is also suitable for temporarily packaging other types of egg packaging than trays, for example egg boxes for 6, 12 or 18 eggs.

The method according to the present invention is defined in the independent method claim 11.

The packaging unit is moved from the pick-up location in a first moving direction, wherein the first moving direction encloses an acute angle with the feed direction. In this way, a continuous stacking process may be obtained, in which no jolts which might damage the packaging unit and/or the product occur or in which the risk of such jolts is at least as small as possible, while the capacity of the number of packaging units to be stacked per unit time can be increased.

From the pick-up location, the first moving direction may enclose various increasingly larger acute angles with the feed direction. It is also possible for the first moving direction to enclose one constant acute angle with the feed direction. The first moving direction changes into a second moving direction if the packaging unit is moved vertically or at an angle of 90 degrees or more with respect to the feed direction or if the acute angle of the first moving direction changes to a less acute angle.

Advantageous further aspects of the device and the method are described in the dependent claims.

The device will now be explained in more detail with reference to an exemplary embodiment illustrated in the figures, in which:
Fig. 1 shows a perspective view of the device for stacking rectangular packaging units;
Fig. 2 shows a perspective view of the device from Fig. 1 in use;
Fig. 3 shows a side view of the device for stacking rectangular packaging units;
Fig. 4 shows a top view of a part of the device for stacking rectangular packaging units;
Fig. 5 shows an exploded view of the device for stacking rectangular packaging units.

In the figures, identical components are denoted by the same reference numerals.

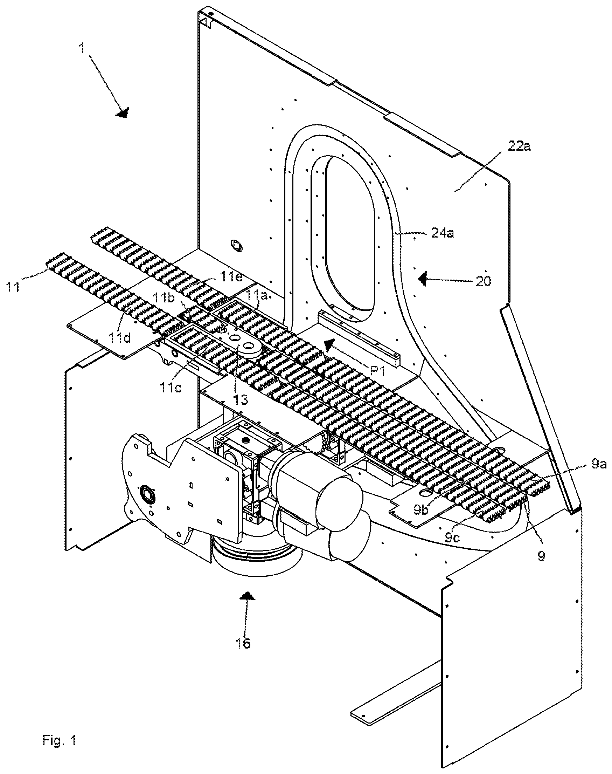

Figs. 1-5 show different views of an exemplary embodiment of (parts of) the device 1 according to the present invention.

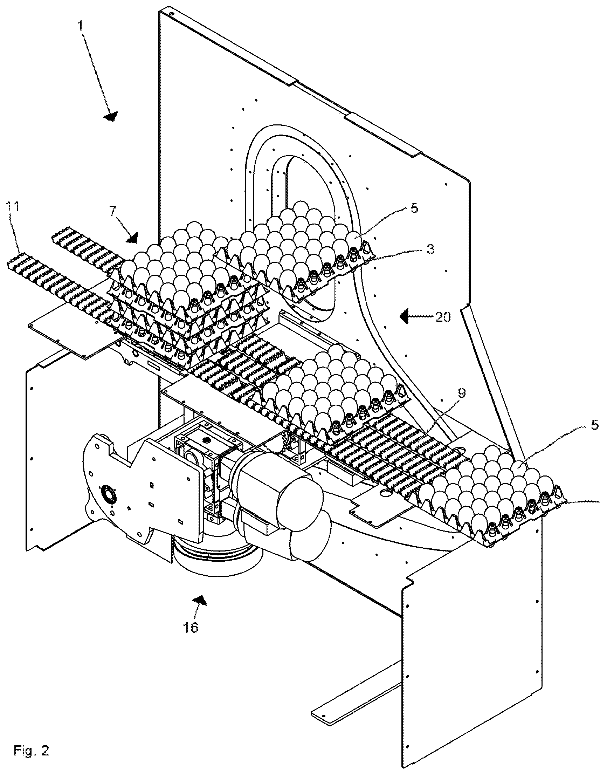

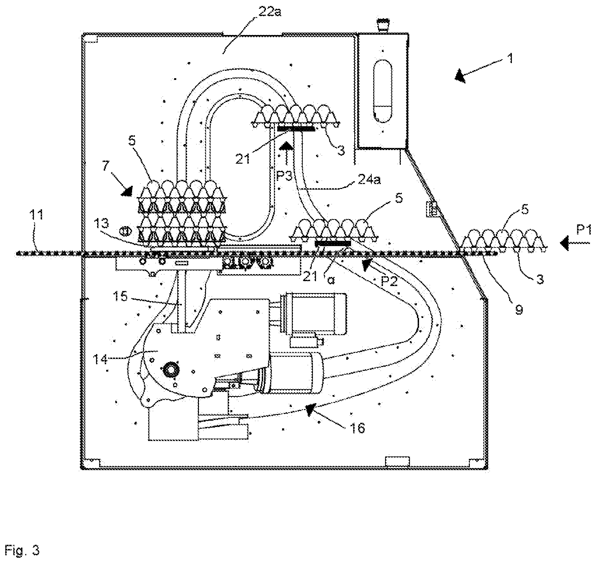

The device 1 for stacking rectangular packaging units comprises at least one feed belt 9 for supplying the packaging units in a feed direction P1. The packaging units are trays, see Figs. 2 and 3; reference numeral 3, in particular trays 3 which are filled with eggs 5.

The device 1 furthermore comprises a discharge system with at least one discharge belt 11, and a support 13 as a stacking location for forming a stack 7 of trays.

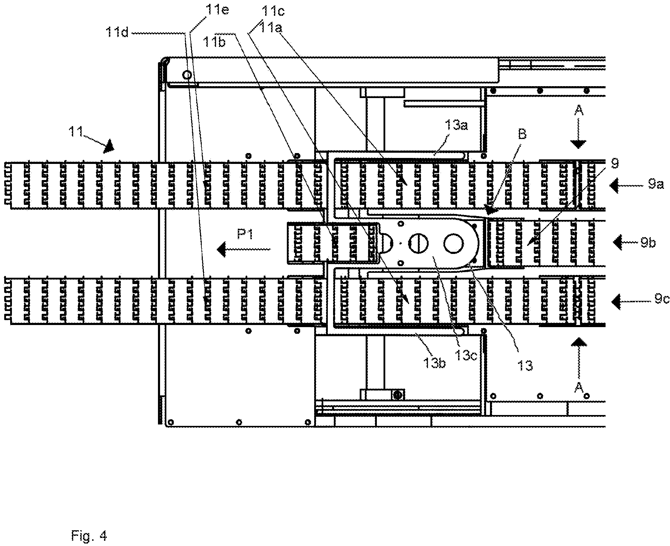

The feed belt 9 and the discharge belt 11 are provided with a middle belt 9b, 11b which is offset, in the conveying direction P1, with respect to two adjacent belts 9a, 9c; 11a, 11c, 11d, 11e between which the middle belt 9b, 11b is arranged. In this way, it is also possible to achieve continuous transportation in the conveying direction P1 by means of the device 1, if no stacking function is desired temporarily. In this case, this configuration of the middle belts 9b, 11b also provides sufficient space to incorporate the support 13 into the conveyor (feed belt 9 and discharge belt 11). In the illustrated exemplary embodiment, the conveying direction P1 is identical to the feed direction P1. The belts 11a, 11b, 11c, 11d, 11e of the discharge system are situated in line with the corresponding belts 9a, 9b, 9c of the feed belt 9, with the distance A, B (Fig. 4) between the feed belt 9 and the discharge belt 11, viewed from the line, being such that a tray 3 can be transported from the feed belt 9 to the discharge belt 11 in such a way that a tray 3 can be transported without jolts or virtually without jolts from the feed belt 9 to the discharge belt 11. Furthermore, the first discharge direction P1 for the stack 7 of the discharge system from the stacking location on the support 13 is identical to the feed direction P1 of the feed belt 9 at the pick-up location.

The support 13 is a kind of fork, the outer legs 13a, 13b (Fig. 4) of which are situated along the longitudinal sides of the discharge system and the middle part 13c of which is situated between the longitudinal sides of the discharge system and between the middle belt 9b of the feed belt 9 and the middle belt 11b of the discharge belt 11. By means of a drive mechanism 14 comprising a drive rod 15, the support 13 is movable from a first position (not shown), in which an upper surface of the support 13 is situated below or parallel to an upper surface of the discharge system, to a second position (see for example Fig. 3), in which the upper surface of the support 13 is situated above the upper surface of the discharge system and vice versa.

By means of the drive mechanism 14, the support 13 is rotatable in stages by quarter turns.

The device 1 furthermore comprises a stacking unit 20 comprising at least one carrier member 21 (Fig. 3) for picking up at least one tray 3 from a pick-up location on the feed belt 9 in order to move the tray 3 from the feed belt 9 to the support 13 by means of the carrier member 21, wherein a first moving direction P2 (Fig. 3) of the carrier member 21 from the pick-up location encloses an acute angle α with the feed direction P1.

With the illustrated device 1, the acute angle α is approximately 30 degrees at the pick-up location.

The acute angle α has to comply with the definition of an acute angle in any circumstance, that is to say the angle α is greater than zero degrees and smaller than 90 degrees. Preferably, the acute angle α is in a range between 10-60 degrees, still more preferably in a range between 20-40 degrees.

The horizontal conveyor extends beyond the support 13, wherein a drive 16 of the feed belt 9 and of the discharge belt 11 are separated near the stacking location, see also Fig. 4 positions A and B for interruption/separation of the feed belt 9 and the discharge belt 11, in order to be able to drive the supply of trays 3 and the discharge of a stack 7 of trays independently from each other.

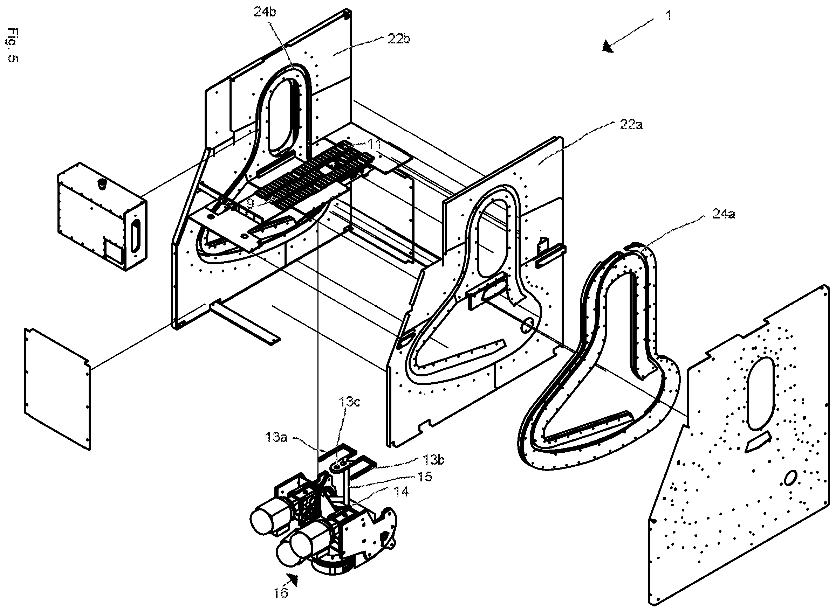

The stacking unit 20 preferably comprises several carrier members 21. In walls 22a, 22b (Fig. 5) of the stacking unit 20 next to the horizontal conveyor, there are guides 24a, 24b for the carrier members 21. Each carrier member 21 is provided with a first carrier part (not shown) which is secured in the guide 24a and with a second carrier part which is secured in the guide 24b and the second carrier part is not connected to the first carrier part. By means of such a carrier member 21, it is possible to pick up a rectangular tray on either side at the pick-up location by means of the first carrier part and the second carrier part. The carrier parts cooperate as a pair in order to move a tray 3 from the pick-up location to the stacking location. The carrier member 21 is movable via an endless path formed by the guides 24a, 24b between the pick-up location and the support 13 as stacking location above the conveyor and from the support 13 to the pick-up location under the conveyor.

Preferably, the first carrier parts provide a first chain (not shown) in the guide 24a and the second carrier parts provide a second chain (not shown) in the guide 24b. Each carrier part may be provided with a bearing part (not shown) comprising at least one bearing which is movable in an endless bearing profile (not shown) which is provided in or on a wall 22a, 22b of the stacking unit 20, wherein each carrier part may furthermore be provided with a guide element (not shown) which is hingeably connected to the bearing part and is movably situated in the guide 24a, 24b which is provided in or on the wall 22a, 22b of the stacking unit 20. A carrier part which is constructed in this way ensures that the carrier member 21 remains horizontal for carrying the tray 3 while moving along the path between the pick-up location and the stacking location.

These guides 24a, 24b extend near the pick-up location, viewed from the conveying direction, from below the horizontal feed belt 9 obliquely upwards in order, in use, to move the carrier member 21 in the first moving direction P2, which first moving direction P2 from the pick-up location encloses the acute angle α with the feed direction P1. In use, a pair of carrier parts moves at a speed whose horizontal component equals the horizontal supply velocity in the feed direction P1 of the feed belt 9. The carrier member 21 picks up a tray 3 at the pick-up location (where the guide 24a, 24b intersects the feed belt 9) and thus lifts the tray 3 from the horizontal conveyor.

The carrier members 21 follow the track of the guide 24a, 24b, which initially continues to run obliquely upward, after which the carrier members 21 start to follow the path of an upturned U, in order to be able to deposit the tray 3 onto the support 13 or onto an already partly formed stack 7 of trays at the stacking location. When the desired number of trays 3 has been stacked, the stack 7 is moved down by means of the support 13 and placed on the discharge belt 11 in order to be discharged. The last tray may optionally be an empty (covering) tray 3 to cover the eggs of the last tray 3 comprising eggs 5 on the stack 7. The discharge belt 11 may also move the stack 7 to, for example, a position in which the covering tray is placed onto the stack 7 or in which another operation may be performed on the stack 7 of trays.

An advantage of the device 1 is the fact that a supplied tray 3 with eggs 5 to be stacked can be removed from the feed belt 9 without interruption of the (horizontal component of the) movement. In use, the velocity component of the carrier member 21 extending in the feed direction P1 equals a supply velocity of the feed belt 9 in the feed direction P1 at the pick-up location.

Thus, no empty space has to be left between supplied trays, as was customary until now with traditional stackers.

In the device 1, the trays 3 may be lifted up from the feed belt 9 in an uninterrupted movement at a more or less constant speed of the feed direction P1 by means of the carrier member for a partly vertical movement of the trays 3 in order to stack the trays 3. Due to the absence of interruptions (in the horizontal direction), jolts during transportation and the associated risk of damage and/or breakage are prevented. In addition, the capacity of the device can be increased.

The stacking location has a fork-like support 13 which supports the bottom tray 3 of each stack 7 and in each case turns them a quarter turn in order to stack the trays 3 in a staggered fashion.

Due to the fact that the feed belt and the discharge belt (the conveyor) are in line with one another, it is also possible to convey different packs, in which case, if desired, the carrier members of the stacking unit are deactivated or at least do not engage with the passing packs. In this way, the packaging device can be used in multiple ways. The support 13 is then in the first position below the level at which the trays or other packs are supported on the conveyor.

The method for stacking rectangular packaging units, for example trays, in order to form a stack of packaging units, comprises the following steps:
- the rectangular packaging units are supplied in a feed direction P1 by means of at least one feed belt 9,
- a packaging unit is picked up from the packaging units at a pick-up location on the feed belt 9 by means of a carrier member 21 and moved to a stacking location, wherein the packaging unit is moved from the pick-up location in a first moving direction, wherein the first moving direction P2 encloses an acute angle with the feed direction P1. The acute angle α has already been described above.

The first moving direction P2 may enclose various increasingly larger acute angles with the feed direction P1 from the pick-up location or enclose one constant acute angle with the feed direction P1. In the illustrated exemplary embodiment, the first moving direction P2 changes into a second moving direction P3, a substantially vertical moving direction P3. The transition may also be defined by another moving direction, for example if the packaging unit 3 is moved at an angle of 90 degrees or more with respect to the feed direction P1 or if the acute angle of the first moving direction changes to a less acute angle, for example in order to pass through the bend in order to move the tray 3 down after having moved it up for forming the stack 7 of trays.

Instead of horizontally, the feed belt 9 may also extend at a small angle 9 (not shown).

## Claims

1. Device (1) for stacking rectangular packaging units, for example trays (3), in order to form a stack (7) of packaging units, wherein the device is provided with at least one feed belt (9) for supplying packaging units in a feed direction (P1), with a support (13), and with a stacking unit (20) comprising at least one carrier member (21) for picking up at least one packaging unit from a pick-up location on the feed belt in order to move the packaging unit from the feed belt to the support by means of the carrier member, wherein a first moving direction (P2) of the carrier member from the pick-up location encloses an acute angle (α) with the feed direction, **characterized in that** the device is furthermore provided with a discharge system, wherein the support is at least partly situated between the longitudinal sides of the discharge system and is movable from a first position, in which an upper surface of the support is situated below or parallel to an upper surface of the discharge system, to a second position of the support as stacking location to form a stack (7) of packaging units, in which the upper surface of the support is situated above the upper surface of the discharge system and vice versa, wherein the discharge system is provided with at least one discharge belt (11), wherein the at least one discharge belt is situated in line with the at least one feed belt, with the distance (A, B) between the feed belt and the discharge belt, viewed from the line, being such that a packaging unit can be transported from the feed belt to the discharge belt.

2. Device (1) according to claim 1, wherein the acute angle (α) at the pick-up location is less than 60 degrees, preferably less than 40 degrees and/or more than 10 degrees, preferably more than 20 degrees.

3. Device (1) according to any of the preceding claims, wherein the support (13) is rotatable by a quarter turn, preferably after a packaging unit has been deposited on the support by means of the carrier member (21).

4. Device (1) according to any of the preceding claims, wherein the at least one carrier member (21) is provided with a first carrier part and with a second carrier part which is separate from the first carrier part for picking up a rectangular packaging unit on either side by means of the first carrier part and the second carrier part, wherein the carrier member is movable via an endless path between the pick-up location and the support (13) and from the support to the pick-up location.

5. Device (1) according to claim 4, wherein the device comprises several carrier members (21), the first carrier parts of which provides a first chain and the second carrier parts of which provides a second chain.

6. Device (1) according to claim 4 or 5, wherein each carrier part is provided with a bearing part comprising at least one bearing which is movable in an endless bearing profile which is provided in or on a wall (22a, 22b) of the stacking unit (20), preferably each carrier part is provided with a guide element which is hingeably connected to the bearing part and is movably situated in a guide (24a, 24b) which is provided in or on the wall of the stacking unit.

7. Device (1) according to any of the preceding claims, wherein the discharge direction (P1) of the stack (7) of packaging units of the discharge system from the stacking location is identical to the feed direction of the feed belt (9) at the pick-up location.

8. Device (1) according to any of the preceding claims, wherein the distance is chosen in such a way that a packaging unit can be transported without jolts or virtually without jolts from the feed belt (9) to the discharge belt (11).

9. Device (1) according to any of the preceding claims, wherein the feed belt (9) and/or the discharge belt (11) is provided with a middle belt (9b, 11b) which is offset, in the conveying direction (P1), with respect to two adjacent belts (9a, 9c; 11a, 11c, 11d, 11e) between which the middle belt is arranged, wherein the middle belt is adapted to achieve continuous transportation in the conveying direction if no stacking function is desired temporarily.

10. Device (1) according to any of the preceding claims, wherein, in use, the velocity component of the carrier member (21) extending in the feed direction equals a supply velocity of the feed belt in the feed direction at the pick-up location.

11. Method for stacking rectangular packaging units, for example trays (3), in order to form a stack of packaging units (7), wherein the rectangular packaging units are supplied in a feed direction (P1) by means of at least one feed belt (9), wherein a packaging unit of the packaging units is picked up at a pick-up location on the feed belt by means of a carrier member (21) and moved to a stacking location, wherein the packaging unit is moved from the pick-up location in a first moving direction (P2), wherein the first moving direction encloses an acute angle (α) with the feed direction, **characterized in that** the stacking location is provided by a support (13) which is at least partly situated between the longitudinal sides of a discharge system, wherein the support is moved from a first position, in which an upper surface of the support is situated below or parallel to an upper surface of the discharge system, to a second position of the support as stacking location to form a stack (7) of packaging units, in which the upper surface of the support is situated above the upper surface of the discharge system and vice versa, wherein the discharge system is provided with at least one discharge belt (11), wherein the at least one discharge belt is situated in line with the at least one feed belt, with the distance (A, B) between the feed belt and the discharge belt, viewed from the line, being such that a packaging unit can be transported from the feed belt to the discharge belt.

12. Method according to claim 11, wherein the acute angle (α) at the pick-up location is less than 60 degrees, preferably less than 40 degrees and/or more than 10 degrees, preferably more than 20 degrees.

13. Method according to claim 11 or 12, wherein the first moving direction encloses various increasingly larger acute angles with the feed direction from the pick-up location or encloses one constant acute angle with the feed direction (P1), wherein the first moving direction changes into a second moving direction if the packaging unit is moved vertically or at an angle of 90 degrees or more with respect to the feed direction or if the acute angle of the first moving direction changes to a less acute angle.

14. Method according to claim 11, 12 or 13, wherein the velocity component of the carrier member (21) extending in the feed direction equals a supply velocity of the feed belt in the feed direction at the pick-up location.

## Patentansprüche

1. Vorrichtung (1) zum Stapeln rechteckiger Verpackungseinheiten, zum Beispiel Schalen (3), um einen Stapel (7) aus Verpackungseinheiten auszubilden, wobei die Vorrichtung mit mindestens einem Vorschubband (9) zum Zuführen von Verpackungseinheiten in eine Vorschubrichtung (P1), mit einer Auflage (13) und mit einer Stapeleinheit (20), die mindestens ein Trägerelement (21) zum Aufnehmen mindestens einer Verpackungseinheit von einem Aufnahmeort auf dem Vorschubband, um die Verpackungseinheit mittels des Trägerelements vom Vorschubband zur Auflage zu bewegen, versehen ist, wobei eine erste Bewegungsrichtung (P2) des Trägerelements vom Aufnahmeort einen spitzen Winkel (α) zur Vorschubrichtung umschließt, **dadurch gekennzeichnet, dass** die Vorrichtung ferner mit einem Abgabesystem versehen ist, wobei die Auflage zumindest teilweise zwischen den Längsseiten des Abgabesystems angeordnet und von einer ersten Position, in der eine obere Fläche der Auflage unter oder parallel zu einer oberen Fläche des Abgabesystems angeordnet ist, zu einer zweiten Position der Auflage als Stapelort zum Ausbilden eines Stapels (7) aus Verpackungseinheiten, in der sich die obere Fläche der Auflage über der oberen Fläche des Abgabesystems befindet, und umgekehrt beweglich ist, wobei das Abgabesystem mit mindestens einem Abgabeband (11) versehen ist, wobei das mindestens eine Abgabeband mit dem mindestens einen Vorschubband in einer Linie angeordnet ist, wobei der Abstand (A, B) zwischen dem Vorschubband und dem Abgabeband, von der Linie betrachtet, derart ist, dass eine Verpackungseinheit vom Vorschubband zum Abgabeband transportierbar ist.

2. Vorrichtung (1) nach Anspruch 1, wobei der spitze Winkel (α) am Aufnahmeort weniger als 60 Grad, vorzugsweise weniger als 40 Grad und/oder mehr als 10 Grad, vorzugsweise mehr als 20 Grad, beträgt.

3. Vorrichtung (1) nach einem der vorstehenden Ansprüche, wobei die Auflage (13), vorzugsweise nachdem eine Verpackungseinheit mittels des Trägerelements (21) auf der Auflage abgesetzt wurde, um eine Vierteldrehung drehbar ist.

4. Vorrichtung (1) nach einem der vorstehenden Ansprüche, wobei das mindestens eine Trägerelement (21) mit einem ersten Trägerteil und mit einem vom ersten Trägerteil getrennten zweiten Trägerteil versehen ist, um eine rechteckige Verpackungseinheit auf beiden Seiten mittels des ersten Trägerteils und des zweiten Trägerteils aufzunehmen, wobei das Trägerelement über eine Endlosbahn zwischen dem Aufnahmeort und der Auflage (13) und von der Auflage zum Aufnahmeort beweglich ist.

5. Vorrichtung (1) nach Anspruch 4, wobei die Vorrichtung mehrere Trägerelemente (21) umfasst, wobei deren erste Trägerteile eine erste Kette vorsehen und deren zweite Trägerteile eine zweite Kette vorsehen.

6. Vorrichtung (1) nach Anspruch 4 oder 5, wobei jeder Trägerteil mit einem Lagerteil versehen ist, der mindestens ein Lager umfasst, das in einem Endloslagerprofil beweglich ist, das in oder an einer Wand (22a, 22b) der Stapeleinheit (20) vorgesehen ist, wobei vorzugsweise jeder Trägerteil mit einem Führungselement versehen ist, das gelenkig mit dem Lagerteil verbunden und beweglich in einer Führung (24a, 24b), die in oder an der Wand der Stapeleinheit vorgesehen ist, angeordnet ist.

7. Vorrichtung (1) nach einem der vorstehenden Ansprüche, wobei die Abgaberichtung (P1) des Stapels (7) aus Verpackungseinheiten des Abgabesystems vom Stapelort mit der Vorschubrichtung des Vorschubbands (9) am Aufnahmeort identisch ist.

8. Vorrichtung (1) nach einem der vorstehenden Ansprüche, wobei der Abstand derart gewählt ist, dass eine Verpackungseinheit ohne Rucken oder nahezu ohne Rucken vom Vorschubband (9) zum Abgabeband (11) transportierbar ist.

9. Vorrichtung (1) nach einem der vorstehenden Ansprüche, wobei das Vorschubband (9) und/oder das Abgabeband (11) mit einem Mittelband (9b, 11b) versehen ist, das in Förderrichtung (P1) in Bezug zu zwei angrenzenden Bändern (9a, 9c; 11a, 11c, 11d, 11e), zwischen denen das Mittelband angeordnet ist, versetzt ist, wobei das Mittelband dazu eingerichtet ist, einen durchgehenden Transport in Förderrichtung zu erreichen, wenn vorübergehend keine Stapelfunktion erwünscht ist.

10. Vorrichtung (1) nach einem der vorstehenden Ansprüche, wobei die Geschwindigkeitskomponente des sich in die Vorschubrichtung erstreckenden Trägerelements (21) bei der Verwendung der Zuführgeschwindigkeit des Vorschubbands in Vorschubrichtung am Aufnahmeort gleicht.

11. Verfahren zum Stapeln rechteckiger Verpackungseinheiten, zum Beispiel Schalen (3), um einen Stapel (7) aus Verpackungseinheiten auszubilden, wobei die rechteckigen Verpackungseinheiten mittels mindestens eines Vorschubbands (9) in eine Vorschubrichtung (P1) zugeführt werden, wobei eine Verpackungseinheit der Verpackungseinheiten mittels eines Trägerelements (21) an einem Aufnahmeort auf dem Vorschubband aufgenommen und zu einem Stapelort bewegt wird, wobei die Verpackungseinheit vom Aufnahmeort in eine erste Bewegungsrichtung (P2) bewegt wird, wobei die erste Bewegungsrichtung einen spitzen Winkel (α) zur Vorschubrichtung umschließt, **dadurch gekennzeichnet, dass** der Stapelort durch eine Auflage (13) vorgesehen ist, die zumindest teilweise zwischen den Längsseiten des Abgabesystems angeordnet ist, wobei die Auflage von einer ersten Position, in der eine obere Fläche der Auflage unter oder parallel zu einer oberen Fläche des Abgabesystems angeordnet ist, zu einer zweiten Position der Auflage als Stapelort zum Ausbilden eines Stapels (7) aus Verpackungseinheiten, in der sich die obere Fläche der Auflage über der oberen Fläche des Abgabesystems befindet, und umgekehrt beweglich ist, wobei das Abgabesystem mit mindestens einem Abgabeband (11) versehen ist, wobei das mindestens eine Abgabeband mit dem mindestens einen Vorschubband in einer Linie angeordnet ist, wobei der Abstand (A, B) zwischen dem Vorschubband und dem Abgabeband, von der Linie betrachtet, derart ist, dass die Verpackungseinheit vom Vorschubband zum Abgabeband transportierbar ist.

12. Verfahren nach Anspruch 11, wobei der spitze Winkel (α) am Aufnahmeort weniger als 60 Grad, vorzugsweise weniger als 40 Grad und/oder mehr als 10 Grad, vorzugsweise mehr als 20 Grad, beträgt.

13. Verfahren nach Anspruch 11 oder 12, wobei die erste Bewegungsrichtung verschiedene zunehmend größere spitze Winkel zur Vorschubrichtung vom Aufnahmeort umschießt oder einen konstanten spitzen Winkel zur Vorschubrichtung (P1) umschließt, wobei sich die erste Bewegungsrichtung zur zweiten Bewegungsrichtung ändert, wenn die Verpackungseinheit vertikal oder in einem Winkel von 90 Grad oder mehr in Bezug zur Vorschubrichtung bewegt wird, oder wenn sich der spitze Winkel der ersten Bewegungsrichtung zu einem weniger spitzen Winkel ändert.

14. Verfahren nach Anspruch 11, 12 oder 13, wobei die Geschwindigkeitskomponente des sich in die Vorschubrichtung erstreckenden Trägerelements (21) der Zuführgeschwindigkeit des Vorschubbands in Vorschubrichtung am Aufnahmeort gleicht.

## Revendications

1. Dispositif (1) d'empilage d'unités d'emballage rectangulaires, par exemple des plateaux (3), afin de former une pile (7) d'unités d'emballage, dans lequel le dispositif est pourvu d'au moins une bande d'alimentation (9) pour fournir des unités d'emballage dans une direction d'alimentation (P1), d'un support (13) et d'une unité d'empilage (20) comprenant au moins un élément porteur (21) pour prélever au moins une unité d'emballage depuis un emplacement de prélèvement sur la bande d'alimentation afin de déplacer l'unité d'emballage de la bande d'alimentation vers le support au moyen de l'élément porteur, dans lequel une première direction de déplacement (P2) de l'élément porteur depuis l'emplacement de prélèvement forme un angle aigu (α) avec la direction d'alimentation, **caractérisé en ce que** le dispositif est en outre pourvu d'un système de décharge, dans lequel le support est au moins partiellement situé entre les côtés longitudinaux du système de décharge et peut se déplacer d'une première position, dans laquelle une surface supérieure du support est située en dessous d'une surface supérieure du système de décharge ou parallèlement à celle-ci, à une seconde position du support comme emplacement d'empilage pour former une pile (7) d'unités d'emballage, dans laquelle la surface supérieure du support est située au-dessus de la surface supérieure du système de décharge et vice versa, dans lequel le système de décharge est pourvu d'au moins une bande de décharge (11), dans lequel l'au moins une bande de décharge est située en ligne avec l'au moins une bande d'alimentation, la distance (A, B) entre la bande d'alimentation et la bande de décharge, vue depuis la ligne, étant telle qu'une unité d'emballage peut être transportée de la bande d'alimentation à la bande de décharge.

2. Dispositif (1) selon la revendication 1, dans lequel l'angle aigu (α) à l'emplacement de prélèvement est inférieur à 60 degrés, de préférence inférieur à 40 degrés, et/ou supérieur à 10 degrés, de préférence supérieur à 20 degrés.

3. Dispositif (1) selon l'une des revendications précédentes, dans lequel le support (13) peut tourner d'un quart de tour, de préférence après qu'une unité d'emballage a été déposée sur le support au moyen de l'élément porteur (21).

4. Dispositif (1) selon l'une des revendications précédentes, dans lequel l'au moins un élément porteur (21) est pourvu d'une première partie porteuse et d'une seconde partie porteuse qui est séparée de la première partie porteuse pour prélever une unité d'emballage rectangulaire de chaque côté au moyen de la première partie porteuse et de la seconde partie porteuse, dans lequel l'élément porteur est mobile sur un trajet sans fin entre l'emplacement de prélèvement et le support (13) et du support à l'emplacement de prélèvement.

5. Dispositif (1) selon la revendication 4, dans lequel le dispositif comprend plusieurs éléments porteurs (21), dont les premières parties porteuses fournissent une première chaîne et les secondes parties porteuses fournissent une seconde chaîne.

6. Dispositif (1) selon la revendication 4 ou 5, dans lequel chaque partie porteuse est pourvue d'une partie de palier comprenant au moins un palier qui est mobile dans un profil de palier sans fin qui est prévu dans ou sur une paroi (22a, 22b) de l'unité d'empilage (20), de préférence, chaque partie porteuse est pourvue d'un élément de guidage qui est relié de manière articulée à la partie de palier et est situé de manière mobile dans un guide (24a, 24b) qui est prévu dans ou sur la paroi de l'unité d'empilage.

7. Dispositif (1) selon l'une des revendications précédentes, dans lequel la direction de décharge (P1) de la pile (7) d'unités d'emballage du système de décharge depuis l'emplacement d'empilage est identique à la direction d'alimentation de la bande d'alimentation (9) à l'emplacement de prélèvement.

8. Dispositif (1) selon l'une des revendications précédentes, dans lequel la distance est choisie de manière à ce qu'une unité d'emballage puisse être transportée sans à-coups, ou pratiquement sans à-coups, de la bande d'alimentation (9) à la bande de décharge (11).

9. Dispositif (1) selon l'une des revendications précédentes, dans lequel la bande d'alimentation (9) et/ou la bande de décharge (11) est/sont pourvue(s) d'une bande intermédiaire (9b, 11b) qui est décalée, dans la direction de transport (P1), par rapport à deux bandes adjacentes (9a, 9c ; 11a, 11c, 11d, 11e) entre lesquelles est agencée la bande intermédiaire, dans lequel la bande intermédiaire est adaptée pour assurer un transport continu dans la direction de transport si aucune fonction d'empilage n'est temporairement souhaitée.

10. Dispositif (1) selon l'une des revendications précédentes, dans lequel, lors de l'utilisation, la composante de vitesse de l'élément porteur (21) s'étendant dans la direction d'alimentation est égale à la vitesse de fourniture de la bande d'alimentation dans la direction d'alimentation à l'emplacement de prélèvement.

11. Procédé d'empilage d'unités d'emballage rectangulaires, par exemple des plateaux (3), afin de former une pile d'unités d'emballage (7), dans lequel les unités d'emballage rectangulaires sont fournies dans une direction d'alimentation (P1) au moyen d'au moins une bande d'alimentation (9), dans lequel une unité d'emballage des unités d'emballage est prélevée à un emplacement de prélèvement sur la bande d'alimentation au moyen d'un élément porteur (21) et déplacée vers un emplacement d'empilage, dans lequel l'unité d'emballage est déplacée depuis l'emplacement de prélèvement dans une première direction de déplacement (P2), dans lequel la première direction de déplacement forme un angle aigu (α) avec la direction d'alimentation, **caractérisé en ce que** l'emplacement d'empilage est fourni par un support (13) qui est situé au moins partiellement entre les côtés longitudinaux d'un système de décharge, dans lequel le support est déplacé d'une première position, dans laquelle une surface supérieure du support est située en dessous d'une surface supérieure du système de décharge ou parallèlement à celle-ci, à une seconde position du support comme emplacement d'empilage pour former une pile (7) d'unités d'emballage, dans laquelle la surface supérieure du support est située au-dessus de la surface supérieure du système de décharge et vice versa, dans lequel le système de décharge est pourvu d'au moins une bande de décharge (11), dans lequel l'au moins une bande de décharge est située en ligne avec l'au moins une bande d'alimentation, la distance (A, B) entre la bande d'alimentation et la bande de décharge, vue depuis la ligne, étant telle qu'une unité d'emballage peut être transportée de la bande d'alimentation à la bande de décharge.

12. Procédé selon la revendication 11, dans lequel l'angle aigu (α) à l'emplacement de prélèvement est inférieur à 60 degrés, de préférence inférieur à 40 degrés, et/ou supérieur à 10 degrés, de préférence supérieur à 20 degrés.

13. Procédé selon la revendication 11 ou 12, dans lequel la première direction de déplacement forme divers angles aigus de plus en plus grands avec la direction d'alimentation depuis l'emplacement de prélèvement ou forme un angle aigu constant avec la direction d'alimentation (P1), dans lequel la première direction de déplacement change en une seconde direction de déplacement si l'unité d'emballage est déplacée verticalement ou selon un angle de 90 degrés ou plus par rapport à la direction d'alimentation, ou si l'angle aigu de la première direction de déplacement change en un angle moins aigu.

14. Procédé selon la revendication 11, 12 ou 13, dans lequel la composante de vitesse de l'élément porteur (21) s'étendant dans la direction d'alimentation est égale à la vitesse de fourniture de la bande d'alimentation dans la direction d'alimentation à l'emplacement de prélèvement.
